(19) **Europäisches Patentamt European Patent Office Office européen des brevets**

(11) **EP 3 274 074 B1**

(12) **FASCICULE DE BREVET EUROPEEN**

(45) Date de publication et mention de la délivrance du brevet:
**14.10.2020 Bulletin 2020/42**

(21) Numéro de dépôt: **16718417.5**

(22) Date de dépôt: **25.03.2016**

(51) Int Cl.:
**B01D 53/047** *(2006.01)*

(86) Numéro de dépôt international:
**PCT/FR2016/050677**

(87) Numéro de publication internationale:
**WO 2016/151264 (29.09.2016 Gazette 2016/39)**

(54) **PROCÉDÉ DE PRODUCTION D'OXYGÈNE PAR VPSA COMPRENANT QUATRE ADSORBEURS**

VERFAHREN ZUR SAUERSTOFFPRODUKTION DURCH VPSA MIT VIER ADSORBERN

METHOD FOR PRODUCING OXYGEN BY VPSA COMPRISING FOUR ADSORBERS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.03.2015 FR 1552553**

(43) Date de publication de la demande:
**31.01.2018 Bulletin 2018/05**

(73) Titulaire: **L'Air Liquide Société Anonyme pour l'Etude et l'Exploitation des Procédés Georges Claude**
**75007 Paris (FR)**

(72) Inventeurs:
• **MONEREAU, Christian**
  **34000 Montpellier (FR)**
• **RODRIGUES, Guillaume**
  **94420 Le Plessis Trevise (FR)**
• **TOULEMONDE, Louis**
  **59500 Douai (FR)**

(74) Mandataire: **Laigneau, Amandine**
**L'Air Liquide**
**Direction Propriété Intellectuelle**
**75, Quai d'Orsay**
**75321 Paris Cedex 07 (FR)**

(56) Documents cités:
**EP-A1- 0 350 373    EP-A1- 0 758 625**
**EP-A1- 0 948 989    FR-A1- 2 647 431**
**US-A- 5 223 004**

**Description**

La présente invention est relative à un procédé de production d'oxygène par adsorption d'un flux d'air atmosphérique mettant en œuvre une unité de type VPSA comprenant 4 adsorbeurs.

La production d'oxygène à partir d'air atmosphérique par des unités de type PSA a connu un important développement au cours de ces dernières décennies. Les améliorations ont porté sur les adsorbants, la technologie et le procédé lui-même.

Concernant les adsorbants, les unités les plus performantes utilisent à présent au sein d'un même adsorbeur une première couche destinée à arrêter l'humidité de l'air et au moins partiellement le dioxyde de carbone. Il va s'agir généralement d'alumine activée ou d'alumine activée dopée qui favorise l'adsorption du $CO_2$. En cas d'air particulièrement pollué, une partie au moins de l'alumine activée peut être remplacée par du gel de silice plus résistant.

L'arrêt de l'azote s'effectue préférentiellement sur une zéolite du type LiLSX avec éventuellement une pré couche de zéolite de type X pour arrêter le $CO_2$ résiduel et commencer à adsorber l'azote. Plusieurs types de LiLSX, plus ou moins échangées au lithium par exemple et optimisées en fonction de la pression partielle d'azote à l'intérieur du lit, peuvent être utilisées en couches successives. Préférentiellement, dans la zone saturée en azote en fin de phase de production, on favorisera un adsorbant avec une capacité d'adsorption élevée alors que dans la zone de transfert de masse, on favorisera un adsorbant avec une constante de Henry élevée, tout en prenant en compte les effets thermiques correspondants à ces choix.

Les diamètres (ou diamètres équivalents en cas d'adsorbant sous forme de bâtonnet) sont généralement compris entre 0.5 et 2 mm. La dimension retenue est fonction de la durée du cycle mis en jeu et est un compromis entre cinétique et pertes de charge.

Le procédé proposé ici est basé à priori sur l'utilisation des adsorbants cités ci-dessus mais n'est pas limité à leur emploi.

Les progrès technologiques ont été très nombreux. Ils ont concerné les vannes maintenant plus rapides, plus fiables, plus étanches vis-à-vis de l'atmosphère..., les machines, compresseurs d'air et pompes à vide spécialement adaptées par les constructeurs aux paramètres opératoires des unités de production d'oxygène , l'entraînement par moteur à vitesse variable, le contrôle-commande plus précis, plus performant et plus rapide. Divers types d'adsorbeurs sont utilisés selon les débits mis en jeu ou les conditions économiques locales : adsorbeur cylindrique à axe vertical parfois utilisé en parallèle jusqu'à former un ensemble pouvant aller par exemple jusqu'à 8 unités semblables pour des débits plus élevés (on parle alors de groupe ou de grappes), adsorbeur cylindrique à axe horizontal, adsorbeur radial. Plusieurs systèmes pour maintenir l'adsorbant en place et éviter attrition ou fluidisation ont été employés (surpoids avec des billes de céramique ou d'acier, membrane, ballon, ressort...). On peut ranger également dans ce domaine, la gestion des effets thermiques avec un contrôle de la capacité thermique des lits d'adsorbant par adjonction de matériaux inertes tels des matériaux à changement de phase (MCP). Ces types de développements donnés de façon non exhaustive peuvent être appliqués dans le cadre de l'invention sans que cela puisse être considéré comme une amélioration de ce qui est proposé ici.

Le dernier grand domaine d'amélioration est le procédé lui-même. Par "procédé", on entend ici à la fois l'enchaînement des étapes que va suivre un adsorbeur au cours de son fonctionnement, et les caractéristiques de chacune de ces étapes : durée, quantité de gaz transféré, pression, température...

De façon générale, on désigne par les termes PSA tout procédé d'épuration ou de séparation de gaz mettant en œuvre une variation cyclique de la pression que voit l'adsorbant entre une pression haute, dite pression d'adsorption, et une pression basse, dite pression de régénération. Ainsi, cette appellation générique de PSA est employée indifféremment pour désigner les procédés cycliques suivants, auxquels il est aussi courant de donner des noms plus spécifiques en fonction des niveaux de pression mis en jeu ou du temps nécessaire à un adsorbeur pour revenir à son point initial (temps de cycle):

- Les procédés VSA dans lesquels l'adsorption s'effectue sensiblement à la pression atmosphérique, préférentiellement entre 0.95 et 1.25 bar abs et la pression de désorption est inférieure à la pression atmosphérique, typiquement de 50 à 400 mbar abs.
- Les procédés MPSA ou VPSA dans lesquels l'adsorption s'effectue à une pression haute supérieure à la pression atmosphérique, typiquement entre 1.5 et 6 bar abs, et la désorption à une pression basse inférieure à la pression atmosphérique, généralement comprise entre 200 et 600 mbar abs.

- Les procédés PSA proprement dits dans lesquels la pression haute est sensiblement supérieure à la pression atmosphérique, typiquement entre 3 et 50 bar abs et la pression basse sensiblement égale ou supérieure à la pression atmosphérique, généralement entre 1 et 9 bar abs.
- Les procédés RPSA (Rapid PSA) pour lesquels la durée du cycle de pression est typiquement inférieure à la minute.
- Les procédés URPSA (Ultra Rapid PSA) pour lesquels la durée du cycle de pression est de l'ordre de quelques secondes maximum.

Il convient de noter que ces diverses appellations ne sont pas standardisées et que les limites sont sujettes à variation selon les auteurs.

Avec les définitions précédentes, l'invention concerne aussi bien les procédés VSA que les procédés VPSA. Actuellement, compte tenu des temps de cycle utilisés, il s'agit également de procédé RPSA et éventuellement dans le futur de procédé URPSA. Afin de simplifier le texte, nous nous limiterons désormais au terme VPSA pour englober le domaine d'application de l'invention tel qu'on vient de le définir.

Quel que soit le type de PSA, un adsorbeur va commencer une période d'adsorption jusqu'à ce qu'il soit chargé dans le ou les constituants à arrêter à la pression haute puis va être régénéré par dépressurisation et extraction des composés adsorbés avant d'être remis en état, en pratique repressurisé, pour recommencer une nouvelle période d'adsorption. L'adsorbeur a alors effectué un "cycle de pression" et le principe même du procédé PSA est d'enchaîner ces cycles les uns après les autres; il s'agit donc d'un procédé cyclique. Le temps que met un adsorbeur pour revenir dans son état initial est appelé temps de cycle. Par principe, chaque adsorbeur suit le même cycle avec un décalage temporel qu'on appelle temps de phase ou plus simplement phase. On a donc la relation :

$$\text{Temps de phase} = \text{temps de cycle} / \text{Nombre d'adsorbeurs,}$$

et on voit que le nombre de phases est égal au nombre d'adsorbeurs.

Il existe des unités ne comportant qu'un seul adsorbeur alors que des unités telles par exemple les PSA H2 comportent fréquemment de 10 à 16 adsorbeurs.

Un cycle comporte généralement des périodes de :

- Production ou Adsorption au cours de laquelle le gaz d'alimentation est introduit par une des extrémités de l'adsorbeur, les composés les plus adsorbables sont adsorbés préférentiellement et le gaz enrichi en les composés les moins adsorbables (gaz produit) est extrait par la seconde extrémité. L'adsorption peut se faire à pression montante, à pression sensiblement constante, voire à pression légèrement descendante.
- Dépressurisation au cours de laquelle l'adsorbeur qui n'est plus alimenté en gaz d'alimentation est évacué par au moins une de ses extrémités d'une partie des composés contenus dans l'adsorbant et les volumes libres. En prenant comme référence le sens de circulation du fluide en période d'adsorption, on peut définir des dépressurisations à co-courant, à contre-courant ou simultanément à co et contre-courant.
- Elution ou Purge au cours de laquelle un gaz enrichi en les constituants les moins adsorbables (gaz de purge) circule à travers le lit d'adsorbant afin d'aider à la désorption des composés les plus adsorbables. La Purge se fait généralement à contre-courant.
- Repressurisation au cours de laquelle l'adsorbeur est au moins partiellement repressurisé avant de reprendre une période d'Adsorption. La repressurisation peut se faire à contre-courant et/ou à co-courant, avec des flux divers (alimentation, production, flux internes à l'unité).
- Temps mort au cours de laquelle l'adsorbeur reste dans le même état. Ces temps morts peuvent faire partie intégrale du cycle, permettant la synchronisation d'étapes entre adsorbeurs ou faire partie d'une étape qui s'est terminée avant le temps imparti. Les vannes peuvent être fermées ou rester en l'état selon les caractéristiques du cycle.

Dépressurisation et Repressurisation peuvent s'effectuer de différentes manières, surtout lorsque l'unité PSA comprend une pluralité d'adsorbeurs (ou de capacités). On est ainsi amené à définir des étapes élémentaires pour décrire plus exactement les transferts gazeux qui interviennent entre adsorbeurs (ou capacités) et avec le milieu extérieur (circuits d'alimentation, de gaz produit, de gaz résiduaire basse pression).

On connait du document EP0948989 A1, un adsorbeur d'un VPSA subissant une étape de repressurisation avec de l'oxygène.

Le nombre d'adsorbeurs est relativement indépendant de l'enchaînement des étapes choisi, c'est-à-dire du cycle. L'utilisation de plusieurs adsorbeurs permet d'utiliser directement un flux issu d'un premier adsorbeur dans un second adsorbeur pour peu que les étapes en question soit simultanées. Elle permet donc d'éviter l'emploi de capacités intermédiaires, de mieux profiter des gradients de pression. Cela peut permettre aussi d'optimiser le fonctionnement des machines, de rendre la production continue...

Comme on va le voir, il existe au moins à ce jour des unités VPSA comportant 1, 2, 3 ou 4 adsorbeurs. On peut également utiliser, en parallèle, 2 -ou plus- unités de ce type en mutualisant éventuellement quelques équipements (filtre d'air, silencieux, capacité de production... mis en commun).

Contrairement a beaucoup de procédés, dans le cas de la production d'oxygène, la matière première, c'est-à-dire l'air atmosphérique, est gratuite et la consommation énergétique de l'unité est un des postes prépondérant dans le coût de production de l'oxygène. De ce fait, le moindre gain sur l'énergie spécifique, à investissement constant, est intéressant car il impacte directement et sensiblement les coûts de production.

Cela se traduit dans les faits par l'existence d'un grand nombre de cycles ne différant souvent que par une gestion un peu différente des flux entrant ou sortant ou par une adaptation un peu différente au nombre d'adsorbeurs utilisés.

L'utilisation de programmes de simulation de plus en plus performants permet à présent d'explorer et de comparer un très grand nombre de variantes et l'augmentation progressive des débits en diminuant le coût relatif de l'investissement permet à coût raisonnable une plus grande complexité dans la gestion des flux.

De la même façon, l'amélioration de la cinétique de transfert de matière ou de chaleur liée soit au progrès sur les adsorbants (augmentation de la cinétique intrinsèque), soit à la possibilité d'utiliser des particules de moindre dimension liée aux développements relatif aux adsorbeurs (adsorbeur radial par exemple, monolithe...) permet de raccourcir la durée des cycles et par là la taille des adsorbeurs.

Pour toutes ces raisons (matière première gratuite, moindre poids de l'investissement), la consommation énergétique prend de plus en plus une prépondérante.

Partant de là, un problème qui se pose est de fournir un procédé amélioré présentant un cycle énergétiquement performant.

Une solution de la présente invention est un procédé de production d'oxygène par adsorption d'un flux d'air atmosphérique mettant en œuvre une unité de type VPSA comprenant 4 adsorbeurs, 1 compresseur d'air et 2 pompes à vide, avec chaque adsorbeur suivant un même cycle de pression avec un décalage d'un temps de phase, comprenant les étapes suivantes :

> a) production d'un premier flux gazeux riche en oxygène comprenant une teneur en oxygène T1 tout en chargeant en amont l'adsorbeur du flux d'air atmosphérique,
> b) production d'un second flux gazeux riche en oxygène comprenant une teneur en oxygène T2 < T1,
> c) production d'un troisième flux gazeux riche en oxygène comprenant une teneur en oxygène T3 < T2 < T1 avec extraction simultanée d'un flux résiduaire enrichi en azote,
> d) élution de l'adsorbeur, duquel sont sortis les trois flux gazeux produits aux étapes a), b) et c), au moyen exclusivement du second flux gazeux produit à l'étape b) ou du troisième flux gazeux produit à l'étape c),
> e) repressurisation de l'adsorbeur ayant subi l'élution de l'étape d) avec successivement au moins deux flux, un premier et un deuxième flux de repressurisation, à teneur croissante en oxygène, le premier flux de repressurisation étant le troisième flux gazeux produit à l'étape c) et le deuxième flux de repressurisation étant le deuxième flux gazeux produit à l'étape b).

Selon le cas, le procédé selon l'invention peut présenter une ou plusieurs des caractéristiques suivantes :

- la production du second flux gazeux à l'étape b) s'effectue par dépressurisation à co-courant,
- la production du second flux gazeux à l'étape b) s'effectue en deux temps, un premier temps pendant lequel la production est réalisée par dépressurisation à co-courant et un deuxième temps pendant lequel la production est réalisée par une dépressurisation à co-courant combinée à une dépressurisation à contre-courant,
- la dépressurisation à contre-courant s'effectue au moyen d'une vanne,
- l'étape e) de repressurisation est effectuée avec successivement 3 flux, un premier, un deuxième et un troisième flux de repressurisation, à teneur croissante en oxygène, le premier flux de repressurisation étant le troisième flux gazeux produit à l'étape c), le deuxième flux de repressurisation étant le deuxième flux gazeux produit à l'étape b) et le troisième flux de repressurisation étant le premier flux gazeux produit à l'étape a),
- la pression à la fin de l'étape a) est comprise entre 1,75 et 1,25 bara, préférentiellement entre 1,55 et 1,45 bara, la pression à la fin de l'étape b) est comprise entre 1,5 et 1,0 bara, préférentiellement entre 1,30 et 1,20, la pression à la fin de l'étape c) est comprise entre 1,0 et 0,7 bara, préférentiellement entre 0,90 et 0,80, et la pression basse du cycle de pression est comprise entre 0,25 et 0,45 bara, préférentiellement entre 0,40 et 0,30,
- le temps de cycle de ladite unité est inférieur à 60 secondes, préférentiellement compris entre 15 et 45 secondes,
- au moins une pompe à vide, de préférence une pompe à vide centrifuge, comporte un ou plusieurs étages, en parallèle et/ou en série, choisi parmi le groupe formé par les machines volumétriques de type à lobes, à palettes, à anneau liquide, en particulier à anneau d'eau,
- le compresseur d'air C-air alimente en permanence un des 4 adsorbeurs,
- le premier flux gazeux produit à l'étape a) est envoyé au moins en partie dans une première capacité tampon,
- le second flux gazeux produit à l'étape b) est envoyé au moins en partie dans une deuxième capacité tampon.

Le nouveau cycle proposé ici correspond à la mise en œuvre de 4 adsorbeurs qui vont donc chacun suivre ce cycle avec un décalage temporel entre eux d'un temps de phase (égal au temps de cycle divisé par 4).

La solution proposée ici est plus simple que les solutions de l'art antérieur car elle ne conduit qu'à la production de trois flux de pureté décroissante et diffère quant à l'utilisation de ces flux dans le cycle. L'élution s'effectue en totalité avec un seul flux alors que la repressurisation s'effectue en utilisant successivement les flux produits de pureté croissante.

Le cycle proposé dans le cadre de la présente invention est donc caractérisé par les séquences i, i + 1, i + 2 au cours desquelles l'unité produit 3 flux successifs riches en oxygène et de pureté décroissante. L'étape i correspond à l'étape a) et donc à la production proprement dite avec une pureté moyenne T1 qui correspond généralement à la spécification demandée par le Client, mettons à titre d'exemple 93% volume O2. Au cours de cette étape l'adsorbeur est alimenté en air via une unité de compression d'air (C-air).

L'étape référencée i + 1 correspond à l'étape b) et donc à la production d'un second flux riche en oxygène mais de pureté moyenne T2 inférieure à la précédente, mettons à titre d'exemple 91% volume O2. Cette fraction peut être produite avec ou sans introduction d'air et/ou sans extraction de résiduaire à l'autre extrémité de l'adsorbeur. Plus précisément, l'adsorbeur peut-être isolé côté air et la fraction d'oxygène est produite par décompression à co-courant, ou de l'air peut-être introduit pendant seulement une fraction de cette étape ou pendant toute la durée de l'étape, à débit nominal ou réduit. On peut aussi soutirer simultanément, pendant la totalité ou une partie seulement de l'étape, par dépressurisation à contre-courant un flux riche en azote. On représente ces différentes éventualités par deux cases vides comme décrit plus bas, ce qui caractérise cette étape i+1 (étape b)) étant la production d'oxygène à une pureté moyenne T2 inférieure à celle de la production d'oxygène à l'étape a) T1.

L'étape référencée i+2 correspond à l'étape c) et donc à la production d'un troisième flux riche en oxygène de pureté moyenne T3 inférieure à la précédente, mettons à 89% volume O2. Ce flux est obtenu par une décompression à co-courant simultanée avec une décompression à contre-courant destinée à extraire simultanément de l'adsorbeur un flux riche en azote. Suivant le niveau de pression, cette décompression à contre-courant peut se faire via une vanne et/ou via une pompe à vide. En pratique, il s'agira généralement au moins en fin d'étape d'un pompage sous vide et on a adopté par simplification la représentation [PAV] pour signifier ces différentes possibilités, PAV étant mis pour "pompage sous vide" et la présence de crochets signifiant que l'étape de pompage sous vide n'est pas obligatoire.

La gestion dans le cycle de ces différentes fractions oxygène produites est caractérisé par l'enchaînement des séquences suivantes :

L'étape j correspond à une étape de simple pompage sous vide pour extraire de l'azote. Le côté production de l'adsorbeur est isolé.

L'étape j+1 correspond à une étape d'élution avec pompage. On introduit un gaz riche en oxygène côté production simultanément au pompage. La présence d'oxygène facilite la désorption de l'azote.

Les étapes j+2, j+3 et j+4 sont des étapes de repressurisation de l'adsorbeur.

L'élution de l'étape j+1 se fait uniquement avec le gaz issu de l'étape b), correspondant à l'étape i+1 qu'on a défini précédemment ou uniquement avec le gaz issu de l'étape c) correspondant à l'étape i+2.

La repressurisation se fait quand à elle par étapes successives avec des flux de pureté croissante en oxygène : un premier flux de repressurisation qui est le troisième flux gazeux produit à l'étape c), un deuxième flux de repressurisation qui est le deuxième flux gazeux produit à l'étape b) et éventuellement un troisième flux de repressurisation qui est le premier flux gazeux produit à l'étape a). Suivant les conditions opératoires, l'apport de la troisième repressurisation peut être faible et pourra être évité par simplification. C'est ce que signifie ici la présence de crochets : [T1].

Il existe plusieurs manières de représenter de façon synthétique les cycles d'unité de type PSA.

Nous allons utiliser ici la méthode des tableaux dans laquelle chaque étape élémentaire figure dans une case. On peut définir le cycle en décrivant la totalité des étapes que fait un adsorbeur pendant un cycle. Préférentiellement, on fait figurer l'une sous l'autre la description des différentes phases que suivent simultanément les différents adsorbeurs. Si l'on veut être exhaustif, on décrit le fonctionnement de chaque adsorbeur l'un sous l'autre. Chaque case définit une étape par un intitulé abrégé (Prod, Eq, Purge...). Cette représentation est très compacte et très pratique. Dès lors qu'un flux entrant ou sortant à plusieurs utilisations, cette méthode perd cependant en clarté car il devient difficile de définir simplement l'étape correspondante. Cela reste néanmoins la méthode la plus utilisée actuellement.

On a utilisé ici une méthode intermédiaire en forme de tableau où pour chaque étape on définit les flux entrant et sortant de l'adsorbeur. Cette méthode a déjà été utilisée sous une forme un peu différente. Ainsi par exemple :

| Prod |
| --- |
| ⇧ |

| 1 |
|---|
| ⇧ |
| C-air |

signifie que l'adsorbeur est dans l'étape 1, qu'il reçoit comme alimentation un flux issu d'un compresseur (c-air), ce flux étant dans le cadre de l'invention de l'air atmosphérique. Le flux correspondant à la production (Prod) sort à l'extrémité opposée de l'adsorbeur.

| X |
|---|
| X |
| J |
| ⇩ |
| PAV |

signifie que l'étape j est une étape de simple mise sous vide via une pompe à vide reliée à l'extrémité d'alimentation pendant que le côté production est fermé (X).

On laisse les deux cases du haut ou du bas vide, si ce qu'il se passe respectivement côté production ou côté alimentation n'est pas formellement défini ou n'est pas à définir à ce moment pour une bonne compréhension du cycle , c'est-à-dire par exemple que le fait qu'il y ait une extraction, une injection de gaz ou que l'extrémité soit isolé ne soit pas caractéristique de l'étape en question et que tous les cas, voire leur combinaison, par exemple une injection suivie d'une extraction, soient possibles.

La famille de cycles relative à la présente invention peut alors se caractériser par le tableau suivant, les colonnes laissées libres signifiant qu'outre les 8 étapes décrites, il peut y avoir des étapes additionnelles comme celles correspondant à un changement de pompe à vide, une repressurisation finale simplement à l'air... :

| T1 (Prod) | T2 | T3 | X | T2 ou T3 | T3 | T2 | [T1] [Prod] |
|---|---|---|---|---|---|---|---|
| ⇧ | ⇧ | ⇧ | X | ⇩ | ⇩ | ⇩ | ⇩ |
| i | I+1 | I+2 | J | J+1 | J+2 | J+3 | J+4 |
| ⇧ | | ⇩ | ⇩ | ⇩ | | | |
| C-air | | [PAV] | PAV | PAV | | | |

Selon un mode de réalisation préférentiel, l'élution se fait uniquement avec le second flux gazeux produit à l'étape b) (i+1).

Les étapes caractéristiques sont alors :

| T1 (Prod) | T2 | T3 | X | T2 | T3 | T2 | [T1] [Prod] |
|---|---|---|---|---|---|---|---|
| ⇧ | ⇧ | ⇧ | X | ⇩ | ⇩ | ⇩ | ⇩ |
| i | I+1 | I+2 | J | J+1 | J+2 | J+3 | J+4 |
| ⇧ | | ⇩ | ⇩ | ⇩ | | | |
| C-air | | [PAV] | PAV | PAV | | | |

On notera que la distinction entre les 2 pompes à vide mises en œuvre n'est pas faite à ce niveau, le cycle de pression n'étant pas complet.

Selon un mode de réalisation, la production d'un second flux gazeux riche en oxygène selon l'étape b) se fait par simple dépressurisation à co-courant, correspondant aux étapes caractéristiques suivantes :

| T1 (Prod) | T2 | T3 | X | T2 ou T3 | T3 | T2 | [T1] [Prod] |
|---|---|---|---|---|---|---|---|
| ⇑ | ⇑ | ⇑ | X | ⇓ | ⇓ | ⇓ | ⇓ |
| i | I+1 | I+2 | J | J+1 | J+2 | J+3 | J+4 |
| ⇑ | X | ⇓ | ⇓ | ⇓ | | | |
| C-air | X | PAV | PAV | PAV | | | |

Selon un autre mode de réalisation, la production du second flux gazeux riche en oxygène selon l'étape b) se fait en deux sous étapes, d'abord par simple dépressurisation à co-courant, puis toujours par dépressurisation à co-courant mais simultanément avec une dépressurisation à contre-courant, préférentiellement vers l'atmosphère via une vanne. Ce dernier fonctionnement correspond aux sous étapes caractéristiques suivantes k-a et k-b concernant la production du flux de pureté Pur2, sous étapes qui se substituent à l'étape i+1 dans le tableau ci-dessus.

| T 2 | |
|---|---|
| ⇑ | ⇑ |
| k-a | k-b |
| X | ⇓ |
| X | ATM |

Selon un mode de réalisation non représentatif de l'invention, la repressurisation initiale de l'adsorbeur avec le troisième flux gazeux produit à l'étape c) s'effectue simultanément avec l'introduction d'air à co-courant côté alimentation pendant tout ou partie de cette étape. L'adsorbeur étant sous vide, cette introduction d'air peut se faire directement à partir de l'atmosphère via une vanne. Il peut s'agir d'une vanne tout ou rien ou d'une vanne dont l'ouverture évolue tout au long de l'étape. L'ouverture peut ne s'effectuer qu'en cours d'étape sur une temporisation ou un seuil de pression. Cette ouverture fait partie des paramètres à optimiser. Les logiciels de simulation les plus performants permettent de déterminer les tendances à respecter. Des réglages sur site peuvent permettre d'affiner les caractéristiques d'ouverture. N'étant pas obligé de passer par la pompe à vide et cette injection d'air pouvant être réduite voire nulle, on a adopté pour représenter ces possibilités de fonctionnement la représentation [ATM], d'où les étapes représentatives :

| T1 (Prod) | T2 | T3 | X | T2 ou T3 | T3 | T2 | [T1] [Prod] |
|---|---|---|---|---|---|---|---|
| ⇑ | ⇑ | ⇑ | X | ⇓ | ⇓ | ⇓ | ⇓ |
| i | I+1 | I+2 | J | J+1 | J+2 | J+3 | J+4 |
| ⇑ | X | ⇓ | ⇓ | ⇓ | ⇑ | | |
| C-air | X | [PAV] | PAV | PAV | [ATM] | | |

On conserve dans cette variante la possibilité de faire l'élution par le second ou le troisième flux gazeux de puretés respectives T2 ou T3, mais préférentiellement l'élution se fait au moyen du second flux gazeux produit à l'étape b).

Selon un mode de réalisation non représentatif de l'invention, la repressurisation de l'adsorbeur avec le deuxième flux gazeux produit à l'étape b) s'effectue simultanément avec l'introduction d'air à co-courant côté alimentation pendant tout ou partie de cette étape et préférentiellement durant toute l'étape. L'adsorbeur étant sous vide, l'essentiel de la repressurisation à l'air peut se faire directement à partir de l'atmosphère via une vanne. Il peut s'agir d'une vanne tout ou rien ou d'une vanne dont l'ouverture évolue tout au long de l'étape. L'ouverture peut ne s'effectuer qu'en cours d'étape sur une temporisation ou un seuil de pression. Cette ouverture fait partie des paramètres à optimiser. Comme dit précédemment, l'air est préférentiellement introduit tout au long de cette étape et la représentation correspondante est alors la suivante :

| T1 (Prod) | T2 | T3 | | X | T2 ou T3 | T3 | T2 | [T1] [Prod] |
|---|---|---|---|---|---|---|---|---|
| ⇧ | ⇧ | ⇧ | | X | ⇩ | ⇩ | ⇩ | ⇩ |
| i | I+1 | I+2 | | J | J+1 | J+2 | J+3 | J+4 |
| ⇧ | X | ⇩ | | ⇩ | ⇩ | ⇩ | ⇧ | ⇧ |
| C-air | X | [PAV] | | PAV | PAV | [ATM] | ATM | |

On conserve dans cette variante la possibilité de faire l'élution par le second ou le troisième flux gazeux de puretés respectives T2 ou T3, mais préférentiellement l'élution se fait au moyen du second flux gazeux produit à l'étape b).

Selon une variante non représentative de l'invention, la repressurisation éventuelle de l'adsorbeur avec du gaz issu de la production oxygène s'effectue simultanément avec l'introduction d'air à co-courant côté alimentation. Compte tenu du cycle de pression, cette repressurisation éventuelle se déroule autour de la pression atmosphérique ou en totalité en dessus de la pression atmosphérique. Il est alors nécessaire d'utiliser un moyen de compression (C-air) pour introduire l'air atmosphérique dans l'adsorbeur.

Selon un mode de réalisation préférentiel, le cycle comprend en outre une repressurisation finale de l'adsorbeur avec uniquement introduction d'air côté alimentation. Cette étape précède alors l'étape a) de production d'oxygène à la pureté T1. La durée de cette étape est déterminée par temporisation ou par un seuil de pression. L'air est introduit généralement à partir du compresseur d'air C-air car l'adsorbeur est à une pression supérieure à la pression atmosphérique au moins en fin d'étape. Cette étape se place après l'étape e) de repressurisation.

Chaque adsorbeur étant sous vide pendant une partie non négligeable du cycle, l'air servant à repressuriser l'adsorbeur dans ces conditions (à une pression inférieure à la pression atmosphérique) peut être introduit en totalité ou en partie sans passer par le moyen de compression de l'air atmosphérique C-air. Néanmoins, si pendant une partie de ce temps, ce compresseur est disponible, c'est-à-dire qu'il n'y a pas d'autre adsorbeur qui utilise de l'air comprimé, une partie ou la totalité de l'air peut le traverser, la machine ne consommant alors pas d'énergie (voire en produisant).

Basé sur les caractéristiques précédentes, l'invention concerne alors un procédé de production d'oxygène à partir d'air atmosphérique au moyen d'une unité de type VPSA comportant 1 compresseur d'air C-air , 2 pompes à vide PAV 1 et PAV 2 et 4 adsorbeurs qui suivent chacun un cycle identique avec un décalage temporel d'un temps de phase, le dit cycle pouvant se présenter sous une des différentes formes ci-dessous Cyc 1 à Cyc 6, toutes conformes au principe de l'invention , qui ne se différencient que par la présence ou non d'une repressurisation avec de l'oxygène issu de la production elle-même suivie ou pas d'une recompression à l'air avant l'étape de production et par l'endroit du cycle où l'on passe d'une pompe à vide (PAV 1) à l'autre (PAV 2).

On a retenu arbitrairement pour tous les cycles qui suivent 3 étapes par phase par souci de simplification mais on notera par exemple que pour le premier cycle Cyc 1, les étapes 5 et 6 d'une part ou 8 et 9 d'autre part pourraient être regroupées sans rien changer au fonctionnement du VPSA. Les première et quatrième phases comportent quant à elles 3 étapes distinctes qui ont conduit à ce choix. On notera que l'on a commencé la description du cycle par la production mais qu'on aurait pu choisir une autre étape pour débuter, comme l'étape référencée ici 10 qui correspond au départ de la repressurisation de l'adsorbeur.

Dans les cycles Cyc 1 à Cyc 3, la pompe à vide PAV2 termine la mise en vide commencée par la pompe PAV1 (étape 7) avant d'effectuer l'élution (étapes 8 et 9).

Compte tenu que la pompe à vide PAV1 est disponible sur toute la durée d'une phase, on a admis dans les cycles suivants que la dépressurisation à contre-courant de l'étape 4 se faisait à travers la pompe à vide, même si la pression dans l'adsorbeur était momentanément supérieure à la pression atmosphérique et ce, dans le but de minimiser l'énergie consommée. Il est néanmoins entendu que la fraction de gaz de dépressurisation à une pression supérieure à la pression atmosphérique ou une partie de ce gaz peut être mise directement à l'air sans passer par la pompe à vide pour des raisons mécaniques ou pour augmenter le débit de soutirage.

- Cyc 1

| X | T1 (Prod) | T2 | T3 | X | X | X | T2 ou T3 | | T3 | T2 | T1 (Prod) |
|---|---|---|---|---|---|---|---|---|---|---|---|
| X | ⇧ | ⇧ | ⇧ | X | X | X | ⇩ | ⇩ | ⇩ | ⇩ | ⇩ |
| 1 | 2 (i) | 3(i+1) | 4 (i+2) | 5 (J) | 6 (J) | 7(J) | 8 (J+1) | 9 (J+1) | 10 (J+2) | 11 (J+3) | 12 (J+4) |
| ⇧ | ⇧ | X | ⇩ | ⇩ | ⇩ | ⇩ | ⇩ | ⇩ | ⇧ | ⇧ | ⇧ |
| C-air | C-air | X | PAV1 | PAV1 | PAV1 | PAV2 | PAV2 | PAV2 | [ATM] | ATM | C-air |

Cycle comportant une repressurisation avec une fraction de la production simultanée avec une repressurisation à l'air (étape 12) suivie d'une repressurisation finale à l'air (étape 1).

- Cyc 2

| 1(i) | 2 (i) | 3 (i+1) | 4 (i+2) | 5 (J) | 6 (J) | 7 (J) | 8 (J+1) | 9 (J+1) | 10 (J+2) | 11 (J+3) | 12 |
|---|---|---|---|---|---|---|---|---|---|---|---|
| T1 (Prod) | T1 (Prod) | T2 | T3 | X | X | X | T2 ou T3 | | T3 | T2 | X |
| ⇐ | ⇐ | ⇐ | ⇐ | X | X | X | ⇒ | ⇒ | ⇒ | ⇒ | X |
| ⇐ | ⇐ | X | ⇒ | ⇒ | ⇒ | ⇒ | ⇒ | ⇒ | ⇐ | ⇐ | ⇐ |
| C-air | C-air | X | PAV1 | PAV1 | PAV1 | PAV2 | PAV2 | PAV2 | [ATM] | ATM | C-air |

10

Cycle sans repressurisation à l'oxygène de la production mais avec une repressurisation finale à l'air (étape 12) suivant l'étape de repressurisation avec le flux de Pur2 (étape 11). L'étape suivante (étape 1) est une étape de production.

- Cyc 3

| T1 (Prod) | T1 (Prod) | T2 | T3 | X | X | X | T 2 ou T3 | | T3 | T2 | T1 (Prod) |
|---|---|---|---|---|---|---|---|---|---|---|---|
| ⇐ | ⇐ | ⇐ | ⇐ | X | X | X | ⇒ | ⇒ | ⇒ | ⇒ | ⇒ |
| 1 (i) | 2 (i) | 3 (i+1) | 4 (i+2) | 5 (J) | 6 (J) | 7 (J) | 8 (J+1) | 9 (J+1) | 10 (J+2) | 11 (J+3) | 12 (J+4) |
| ⇐ | ⇐ | X | ⇒ | ⇒ | ⇒ | ⇒ | ⇒ | ⇒ | ⇐ | ⇐ | ⇐ |
| C-air | C-air | X | PAV1 | PAV1 | PAV1 | PAV2 | PAV2 | PAV2 | [ATM] | ATM | C-air |

Cycle avec repressurisation à l'oxygène produit simultanée avec une repressurisation à l'air (étape 12), suivie du début de la production (étape 1).

Les cycles Cyc 4 à Cyc 6 ont la mise sous vide de l'adsorbeur qui s'effectue avec la seule pompe PAV1 et l'élution qui s'effectue uniquement avec la pompe à vide PAV2. Entre les cycles précédents et ceux-ci, on modifie essentiellement le ratio des tailles des pompes à vide, PAV1 étant ici de taille supérieure et PAV2 de taille inférieure. Le ratio des débits-volumes (m$^3$/h) des pompes à vide PAV1 et PAV2 va généralement de 1 pour 1 à 1 pour 2.

- Cyc 4

| | | | | |
|---|---|---|---|---|
| X | X | 1 | ⇦ | C-air |
| T1 (Prod) | ⇦ | 2 (i) | ⇦ | C-air |
| T2 | ⇦ | 3 (i+1) | X | X |
| T3 | ⇦ | 4 (i+2) | ⇨ | PAV1 |
| X | X | 5 (J) | ⇨ | PAV1 |
| X | X | 6 (J) | ⇨ | PAV1 |
| T2 ou T3 | ⇨ | 7(J+1) | ⇨ | PAV2 |
| | ⇨ | 8 (J+1) | ⇨ | PAV2 |
| | ⇨ | 9 (J+1) | ⇨ | PAV2 |
| T3 | ⇨ | 10 (J+2) | ⇦ | [ATM] |
| T2 | ⇨ | 11 (J+3) | ⇦ | ATM |
| T1 (Prod) | ⇨ | 12 (J+4) | ⇦ | C-air |

Cycle comportant une repressurisation avec une fraction de la production simultanée avec une repressurisation à l'air (étape 12) suivie d'une repressurisation finale à l'air (étape 1).

- Cyc 5

| | 1 (i) | 2 (i) | 3 (i+1) | 4 (i+2) | 5 (J) | 6 (J) | 7 (J+1) | 8 (J+1) | 9 (J+1) | 10 (J+2) | 11 (J+3) | 12 |
|---|---|---|---|---|---|---|---|---|---|---|---|---|
| | T1 (Prod) | T1 (Prod) | T2 | T3 | X | X | T2 ou T3 | | | T3 | T2 | X |
| | ⇐ | ⇐ | ⇐ | ⇐ | X | X | ⇒ | ⇒ | ⇒ | ⇒ | ⇒ | X |
| | ⇐ | ⇐ | X | ⇒ | ⇒ | ⇒ | ⇒ | ⇒ | ⇒ | ⇐ | ⇐ | ⇐ |
| | C-air | C-air | X | PAV1 | PAV1 | PAV1 | PAV2 | PAV2 | PAV2 | [ATM] | ATM | C-air |

Cycle sans repressurisation à l'oxygène de la production mais avec une repressurisation finale à l'air (étape 12) suivant l'étape de repressurisation avec le flux de teneur T2 (étape 11). L'étape suivante (étape 1) est une étape de production.

- Cyc 6

| T1 (Prod) | T1 (Prod) | T2 | T3 | X | X | T 2 ou T3 | | | T3 | T2 | [T1] [Prod] |
|---|---|---|---|---|---|---|---|---|---|---|---|
| ⇧ | ⇧ | ⇧ | ⇧ | X | X | ⇩ | ⇩ | ⇩ | ⇩ | ⇩ | ⇩ |
| 1 (i) | 2 (i) | 3 (i+1) | 4 (i+2) | 5 (J) | 6 (J) | 7 (J+1) | 8 (J+1) | 9 (J+1) | 10 (J+2) | 11 (J+3) | 12 (J+4) |
| ⇧ | ⇧ | X | ⇩ | ⇩ | ⇩ | ⇩ | ⇩ | ⇩ | ⇧ | ⇧ | ⇧ |
| C-air | C-air | X | PAV1 | PAV1 | PAV1 | PAV2 | PAV2 | PAV2 | [ATM] | ATM | C-air |

Cycle avec repressurisation à l'oxygène produit simultanée avec une repressurisation à l'air (étape 12), suivie du début de la production (étape 1).

Il convient de noter que les étapes 3 des cycles Cyc 1 à Cyc 6 peuvent être remplacées par les 2 sous étapes 3-a et 3-b comme expliqué précédemment sans changer les caractéristiques fondamentales des cycles à savoir la production des flux de pureté T1, T2 et T3 et leur utilisation dans le cycle.

| T 2 | |
|---|---|
| ⇧ | ⇧ |
| **3-a** | **3-b** |
| X | ⇩ |
| X | ATM |

De façon préférentielle, l'invention concerne un procédé de production d'oxygène à partir d'air atmosphérique au moyen d'une unité de type VPSA comportant 1 compresseur d'air (C-ai)r , 2 pompes à vide(PAV 1 et PAV 2) et 4 adsorbeurs qui suivent chacun un cycle identique avec un décalage temporel d'un temps de phase, le dit cycle pouvant se présenter sous une des différentes formes ci-dessous Cyc 7 à Cyc 12, toutes également conformes au principe de l'invention, qui constituent une sélection par rapport aux cycles précédents en utilisant **exclusivement le flux d'oxygène de pureté intermédiaire T 2 comme gaz d'élution.** Comme pour la série précédente, plus générale, ils ne se différencient entre eux que d'une part par la présence ou non d'une repressurisation avec de l'oxygène issu de la production elle-même suivie ou pas d'une recompression à l'air avant l'étape de production et d'autre part par l'endroit du cycle où l'on passe d'une pompe à vide (PAV 1) à l'autre (PAV 2).

Dans les cycles Cyc 7 à Cyc 9, la pompe à vide PAV2 termine la mise en vide commencée par la pompe PAV1 (étape 7) avant d'effectuer l'élution (étapes 8 et 9).

- Cyc 7

| X | T1 (Prod) | T2 | T3 | X | X | X | T2 | T2 | T3 | T2 | T1 (Prod) |
|---|---|---|---|---|---|---|---|---|---|---|---|
| X | ⇧ | ⇧ | ⇧ | X | X | X | ⇩ | ⇩ | ⇩ | ⇩ | ⇩ |
| **1** | **2 (i)** | **3 (i+1)** | **4 (i+2)** | **5 (J)** | **6 (J)** | **7 (J)** | **8 (J+1)** | **9 (J+1)** | **10 (J+2)** | **11 (J+3)** | **12 (J+4)** |
| ⇧ | ⇧ | X | ⇩ | ⇩ | ⇩ | ⇩ | ⇩ | ⇩ | ⇧ | ⇧ | ⇧ |
| C-air | C-air | X | PAV1 | PAV1 | PAV1 | PAV2 | PAV2 | PAV2 | [ATM] | ATM | C-air |

Cycle comportant une repressurisation avec une fraction de la production simultanée avec une repressurisation à l'air (étape 12) suivie d'une repressurisation finale à l'air (étape 1).

- Cyc 8

| T1 (Prod) | T1 (Prod) | T2 | T3 | X | X | X | T2 | T2 | T3 | T2 | X |
|---|---|---|---|---|---|---|---|---|---|---|---|
| ⇐ | ⇐ | ⇐ | ⇐ | X | X | X | ⇒ | ⇒ | ⇒ | ⇒ | X |
| 1 (i) | 2 (i) | 3 (i+1) | 4 (i+2) | 5 (J) | 6 (J) | 7 (J) | 8 (J+1) | 9 (J+1) | 10 (J+2) | 11 (J+3) | 12 |
| ⇐ | ⇐ | X | ⇒ | ⇒ | ⇒ | ⇒ | ⇒ | ⇒ | ⇐ | ⇐ | ⇐ |
| C-air | C-air | X | PAV1 | PAV1 | PAV1 | PAV2 | PAV2 | PAV2 | [ATM] | ATM | C-air |

Cycle sans repressurisation à l'oxygène de la production mais avec une repressurisation finale à l'air (étape 12) suivant l'étape de repressurisation avec le flux de Pur2 (étape 11). L'étape suivante (étape 1) est une étape de production.

- Cyc 9

| | | | | |
|---|---|---|---|---|
| T1 (Prod) | ⇐ | 1 (i) | ⇐ | C-air |
| T1 (Prod) | ⇐ | 2 (i) | ⇐ | C-air |
| T2 | ⇐ | 3 (i+1) | X | X |
| T3 | ⇐ | 4 (i+2) | ⇒ | PAV1 |
| X | X | 5 (J) | ⇒ | PAV1 |
| X | X | 6 (J) | ⇒ | PAV1 |
| X | X | 7 (J) | ⇒ | PAV2 |
| T2 | ⇒ | 8 (J+1) | ⇒ | PAV2 |
| T2 | ⇒ | 9 (J+1) | ⇒ | PAV2 |
| T3 | ⇒ | 10 (J+2) | ⇐ | [ATM] |
| T2 | ⇒ | 11 (J+3) | ⇐ | ATM |
| T1 [Prod | ⇒ | 12 (J+4) | ⇐ | C-air |

Cycle avec repressurisation à l'oxygène produit simultanée avec une repressurisation à l'air (étape 12), suivie du début de la production (étape 1).

Les cycles Cyc 10 à Cyc 12 ont la mise sous vide de l'adsorbeur qui s'effectue avec la seule pompe PAV1 et l'élution qui s'effectue uniquement avec la pompe à vide PAV2. Entre les cycles précédents et ceux-ci, on modifie essentiellement le ratio des tailles des pompes à vide, PAV1 étant ici de taille supérieure et PAV2 de taille inférieure.

- Cyc 10

| T 1 (Prod) | T 1 (Prod) | T 2 | T 3 | X | X | T2 | T 2 | T 2 | T3 | T 2 | [T1] [Prod] |
|---|---|---|---|---|---|---|---|---|---|---|---|
| ⇑ | ⇑ | ⇑ | ⇑ | X | X | ⇓ | ⇓ | ⇓ | ⇓ | ⇓ | ⇓ |
| **1 (i)** | **2 (i)** | **3 (i+1)** | **4 (i+2)** | **5 (J)** | **6 (J)** | **7 (J+1)** | **8 (J+1)** | **9 (J+1)** | **10 (J+2)** | **11 (J+3)** | **12 (J+4)** |
| ⇑ | ⇑ | X | ⇓ | ⇓ | ⇓ | ⇓ | ⇓ | ⇓ | ⇑ | ⇑ | ⇑ |
| C-air | C-air | X | PAV1 | PAV1 | PAV1 | PAV2 | PAV2 | PAV2 | [ATM] | ATM | C-air |

24

Cycle comportant une repressurisation avec une fraction de la production simultanée avec une repressurisation à l'air (étape 12) suivie d'une repressurisation finale à l'air (étape 1).

- Cyc 11

| T 1 (Prod) | T1 (Prod) | T 2 | T3 | X | X | T2 | T 2 | T 2 | T 3 | T 2 | X |
|---|---|---|---|---|---|---|---|---|---|---|---|
| ⇑ | ⇑ | ⇑ | ⇑ | X | X | ⇓ | ⇓ | ⇓ | ⇓ | ⇓ | X |
| **1 (i)** | **2 (i)** | **3 (i+1)** | **4 (i+2)** | **5 (J)** | **6 (J)** | **7 (J+1)** | **8 (J+1)** | **9 (J+1)** | **10 (J+2)** | **11 (J+3)** | **12** |
| ⇑ | ⇑ | X | ⇓ | ⇓ | ⇓ | ⇓ | ⇓ | ⇓ | ⇑ | ⇑ | ⇑ |
| C-air | C-air | X | PAV1 | PAV1 | PAV1 | PAV2 | PAV2 | PAV2 | [ATM] | ATM | C-air |

Cycle sans repressurisation à l'oxygène de la production mais avec une repressurisation finale à l'air (étape 12) suivant l'étape de repressurisation avec le flux de pureté T2 (étape 11). L'étape suivante (étape 1) est une étape de production.

- Cyc 12

| T 1 (Prod) | T 1 (Prod) | T 2 | T 3 | X | X | T2 | T 2 | T 2 | T3 | T 2 | [T1] [Prod] |
|---|---|---|---|---|---|---|---|---|---|---|---|
| ⇐ | ⇐ | ⇐ | ⇐ | X | X | ⇒ | ⇒ | ⇒ | ⇒ | ⇒ | ⇒ |
| 1 (i) | 2 (i) | 3 (i+1) | 4 (i+2) | 5 (J) | 6 (J) | 7 (J+1) | 8 (J+1) | 9 (J+1) | 10 (J+2) | 11 (J+3) | 12 (J+4) |
| ⇐ | ⇐ | X | ⇒ | ⇒ | ⇒ | ⇒ | ⇒ | ⇒ | ⇐ | ⇐ | ⇐ |
| C-air | C-air | X | PAV1 | PAV1 | PAV1 | PAV2 | PAV2 | PAV2 | [ATM] | ATM | C-air |

Cycle avec repressurisation à l'oxygène produit simultanée avec une repressurisation à l'air (étape 12), suivie du début de la production (étape 1).

Il convient de noter que les étapes 3 des cycles Cyc 7 à Cyc 12 peuvent être remplacées par les 2 sous étapes 3-a et 3-b comme expliqué précédemment sans changer les caractéristiques fondamentales des cycles à savoir la production des flux de pureté T1, T2 et T3 et leur utilisation dans le cycle.

| T 2 | |
|-----|-----|
| ⇧ | ⇧ |
| **3-a** | **3-b** |
| X | ⇩ |
| X | ATM |

On rappelle de même que la recompression à l'air lors de l'étape 10 de tous les cycles (Cyc 1 à Cyc 12) représentée par [ATM] peut être limitée, n'intervenir qu'en cours d'étape, sur une durée ou un seuil de pression, voire être supprimée. Ce choix va pouvoir dépendre des conditions extérieures, en particulier des conditions climatiques plutôt que d'une optimisation fine du cycle pour obtenir les meilleures performances possibles.

La présence d'un taux élevé d'humidité relative associée à une température extérieure élevée comme cela peut se trouver en zone tropicale par exemple peut amener à retarder l'introduction d'air durant l'étape 10 afin d'éviter une pollution trop importante de l'adsorbant. Inversement, par faible humidité relative ou par temps froid, il pourra être plus intéressant d'introduire immédiatement de l'air atmosphérique, conjointement avec le flux d'oxygène de troisième pureté. Ces effets sont à évaluer en fonction du dimensionnement retenu pour le (ou les)lit destiné à l'arrêt des impuretés secondaires. Il y a là encore matière à optimisation. Ainsi, dans un pays plutôt froid et sec en moyenne, et sur un site peu pollué (teneur en $CO_2$ inférieure ou égale à 400 ppm par exemple), on utilisera de préférence le cycle Cyc 13 qui n'est qu'une sélection du cycle Cyc 8 dans laquelle on introduit l'air atmosphérique dès le début de l'étape 10.

Ce cas correspond au tableau ci-dessous :

| T 1 (Prod) | T 1 (Prod) | T 2 | T 3 | X | X | X | T 2 | T 2 | T 3 | T 2 | X |
|---|---|---|---|---|---|---|---|---|---|---|---|
| ⇧ | ⇧ | ⇧ | ⇧ | X | X | X | ⇩ | ⇩ | ⇩ | ⇩ | X |
| **1 (i)** | **2 (i)** | **3 (i+1)** | **4 (i+2)** | **5 (J)** | **6 (J)** | **7 (J)** | **8 (J+1)** | **9 (J+1)** | **10 (J+2)** | **11 (J+3)** | **12** |
| ⇧ | ⇧ | X | ⇩ | ⇩ | ⇩ | ⇩ | ⇩ | ⇩ | ⇧ | ⇧ | ⇧ |
| C-air | C-air | X | PAV1 | PAV1 | PAV1 | PAV2 | PAV2 | PAV2 | ATM | ATM | C-air |

ou à sa variante référencée Cyc 14, représentée ici avec les sous étapes 3-a et 3-b mais que l'on pourrait aussi bien représenter en conservant seulement 3 étapes pour la première phase: 1 correspondant à la production (T1) et 2, 3 dédiées à la production T2. On constatera à nouveau à ce sujet que ce n'est pas la représentation détaillée d'un cycle, sujette à des modifications telles que celle décrite ci-dessus, qui caractérise l'invention mais bien la production des 3 flux d'oxygène à teneur décroissante en O2 et leur utilisation comme élution et gaz de repressurisation.

- Cyc 14

| | | | | |
|---|---|---|---|---|
| T1 (Prod) | ⇐ | 1 (i) | ⇐ | C-air |
| T1 (Prod) | ⇐ | 2 (i) | ⇐ | C-air |
| T2 | ⇐ | 3-a (i+1) | X | X |
| T2 | ⇐ | 3-b (i+1) | ⇒ | ATM |
| T3 | ⇐ | 4 (i+2) | ⇒ | PAV1 |
| X | X | 5 (J) | ⇒ | PAV 1 |
| X | X | 6 (J) | ⇒ | PAV1 |
| X | X | 7 (J) | ⇒ | PAV2 |
| T2 | ⇒ | 8 (J+1) | ⇒ | PAV2 |
| T2 | ⇒ | 9 (J+1) | ⇒ | PAV2 |
| T3 | ⇒ | 10 (J+2) | ⇐ | ATM |
| T2 | ⇒ | 11 (J+3) | ⇐ | ATM |
| X | X | 12 | ⇐ | C-air |

On notera qu'il est facile de modifier ces cycles, y compris en fonctionnement, pour prendre en compte des variations climatiques hiver/été, en jouant sur la quantité d'air introduite pendant le début de la repressurisation (étape 10), par exemple en avançant ou en retardant cette introduction.

De façon plus générale, il est possible de prévoir la possibilité de passer, parmi les cycles précédemment décrits, d'un cycle à un autre en fonction de l'évolution des conditions opératoires (pureté de la production, débit de production, température extérieure et/ou température d'entrée dans les adsorbeurs). Le coût de l'énergie en cas de variations saisonnières par exemple, la nécessité d'utiliser périodiquement un cycle avec une puissance de régénération supérieure pour effectuer l'équivalent d'une régénération exceptionnelle de l'adsorbant servant à retenir les impuretés secondaires... peuvent conduire également à des modifications du cycle de pression tout en restant en permanence dans le cadre de l'invention. L'adjonction de la repressurisation avec une fraction de la production (T 1) peut être un exemple de ces modifications momentanées.

On notera aussi que tout en restant dans un même cycle, il est possible d'adapter aux conditions réelles de fonctionnement un certain nombre de paramètres comme des quantités de gaz transférés, par exemple la quantité de gaz d'élution, la durée de certaines étapes, tout en conservant évidement dans ce cas des temps de phase identiques et les contraintes de simultanéité ou de durée dont on a précédemment parlé, la température d'entrée de l'air dans les adsorbeurs (dans l'hypothèse où il existe un moyen de chauffage ou de refroidissement). Les diverses pressions intermédiaires peuvent constituer en particulier de bons paramètres de réglage.

En prenant l'exemple du cycle Cyc 13, on pourra rajouter par exemple 2 secondes aux étapes 2, 5, 8 et 11 ou au contraire enlever une seconde à ces mêmes étapes s'il s'avérait que l'une ou l'autre modification est intéressante.

Les 2 pompes à vide PAV1 et PAV2 ne fonctionnent à priori pas dans le même domaine de pression. PAV1 part de la pression atmosphérique, voire est alimentée initialement à une pression un peu supérieure de l'ordre de 1.1 à 1.2 bar abs, et descend l'adsorbeur en vide jusqu'à une pression généralement comprise entre 0.45 et 0.65 bar abs alors que PAV2 a une pression d'aspiration plus basse partant de 0.65 à 0.45 pour aller à 0.45 à 0.35 bar abs. On va donc pouvoir adapter le choix des machines à leurs conditions opératoires différentes. Cela va jouer bien sûr sur leur taille (capacité de pompage exprimée en m3/h) mais aussi sur le type de machine.

Ainsi, selon un mode préférentiel de réalisation, la première pompe à vide (PAV1)qui effectue le début de la mise sous vide de l'adsorbeur, comporte un ou plusieurs étages, en parallèle et/ou en série, choisi parmi le groupe formé par les machines volumétriques de type à lobes (Roots), à palettes, à anneau liquide, en particulier à anneau d'eau. Les pompes de type à lobes (Roots) peuvent être sèches ou avec injection d'eau suivant que l'on privilégie la simplicité ou l'énergie spécifique.

La deuxième pompe à vide (PAV2) comporte un ou plusieurs étages en parallèle ou en série, choisi parmi le groupe formé par les machines volumétriques de type à lobes (Roots), à palettes, à anneau liquide, en particulier à anneau d'eau, à vis ou de type centrifuge. Le taux de compression de cette machine varie moins que celui de la première et il est alors possible d'utiliser avantageusement d'autres types de machines qui peuvent être plus efficaces dans ces conditions.

Les première et deuxième pompes à vide peuvent donc être de type différent comme énoncé précédemment.

En particulier, le cycle de pression est généralement tel que la pression de fin d'étape 9 est égale à la pression de début d'étape 7 à plus ou moins 100 millibars, préférentiellement à plus ou moins 50 millibars.

Plus précisément, le cycle de pression peut être tel que la pression dans l'adsorbeur au cours des étapes 7, 8 et 9 , qui correspondent au domaine de fonctionnement de PAV 2 reste dans une fourchette de pression égale à P plus ou moins 100 millibars, préférentiellement égale à P plus ou moins 50 millibars, P étant une pression comprise entre 0.45 et 0.3 bara. La pression de refoulement étant la pression atmosphérique, le taux de compression va rester quasiment constant, compris approximativement entre 2 et 3.

Préférentiellement, la pression dans l'adsorbeur au cours des étapes 7, 8 et 9 reste égale à 450 mbar abs plus ou moins 100 millibars, préférentiellement plus ou moins 50 mbar.

Lors du fonctionnement de la pompe à vide PAV2, on peut moduler si nécessaire le débit de gaz d'élution entre le début et la fin de l'étape soit pour optimiser les performances du cycle, soit pour favoriser le fonctionnement de la pompe à vide, en particulier dans le cas d'une machine centrifuge.

Si on se réfère à un quelconque des cycles cyc 1 à Cyc 12, on peut remarquer qu'il convient d'introduire un certain nombre de contraintes sur la durée des étapes afin d'avoir le cycle optimal, c'est-à-dire éviter des capacités tampon inutiles ou tout du moins de minimiser leur taille et assurer un fonctionnement en continu des machines. En particulier, le fait que la durée de l'étape 4 est égale à la durée de l'étape 10 permet de faire le début de la repressurisation directement avec le flux de troisième pureté produit pendant l'étape 4.

De même de façon préférentielle, la durée de l'étape 12 est égale à la durée de l'étape 3 permettant au compresseur d'air C-air de fonctionner en continu, la somme des durées des étapes 12, 1 et 2 étant égale à une phase du cycle. Cela explique aussi le choix fait ici concernant toute la série de cycles préférentiels (Cyc 1 à 12) à savoir que le flux de pureté intermédiaire T 2 soit obtenu à l'étape 3 (ou 3-a et 3-b) par simple décompression à co-courant et/ou par simple décompression à co-courant simultanée à une dépressurisation vers l'atmosphère, évitant ainsi pendant cette étape l'utilisation d'une quelconque machine.

Pour certains transferts, il est préférable pour ne pas rallonger le cycle en introduisant par exemple des temps morts, d'utiliser des capacités tampon. De façon générale, ces capacités peuvent recevoir tout le flux de gaz soutiré et simultanément fournir une partie de celui-ci si nécessaire ou bien ne recevoir que l'excédent, la partie utilisée simultanément allant directement à l'adsorbeur concerné. La première solution permet une meilleure homogénéisation du flux mais peut conduire à grossir quelques tuyauteries. Ainsi, l'oxygène produit à la deuxième pureté (T2) pendant l'étape 3 est envoyé au moins en partie dans une première capacité tampon.

Sauf si la production d'oxygène alimente à la pression de production un réseau de volume suffisant, l'oxygène constituant la production (T1) produit à la première pureté pendant les étapes 1 et 2 est envoyé au moins en partie dans une seconde capacité tampon.

La productivité (production totale à la pureté requise ou débit d'oxygène compté pur par m3 d'adsorbeur, d'adsorbant total, d'adsorbant dédié à la séparation O2/N2 selon les définitions retenues) est d'autant plus élevée que le temps de cycle est court et que les performances intrinsèques de l'adsorbant et du cycle sont maintenues. Cela met en jeu aussi bien la cinétique de transfert de masse, les pertes de charge (et donc par là, la géométrie de l'adsorbeur), le temps de manœuvre des vannes... Avec la technologie actuelle, les temps de cycle sont généralement inférieur à une minute et se situent préférentiellement dans la fourchette 15 / 45 secondes.

Les effets thermiques internes aux VPSA suivant les cycles préconisés par l'invention seront avantageusement améliorés en utilisant des matériaux à changement de phase, et/ou des adsorbants à capacité thermique améliorée par l'adjonction d'inerte. On sait en particulier que l'utilisation d'un adsorbant avec un noyau inerte augmente la capacité thermique de la particule rendant le cycle plus isotherme mais augmente également la cinétique de transfert de masse. On peut utiliser cette dernière caractéristique pour raccourcir la durée des étapes ou diminuer les pertes de charge en utilisant des particules de taille supérieure à iso-cinétique. Le document FR 2 794 993 décrit une particule adsorbante de ce type.

Les cycles selon l'invention peuvent également être utilisés conjointement avec la mise en œuvre, à la place d'adsorbants particulaires, de contacteurs, en particulier de contacteurs à passages parallèles et préférentiellement de monolithes. On peut trouver une représentation de ces contacteurs par exemple dans le document FR 2 952 553.

Les vannes peuvent être alors remplacées par des distributeurs, en particulier par des systèmes rotatifs. Dans ces conditions, les temps de cycles cités plus haut peuvent alors être divisés par un facteur de 2 à 10 comme ordre de grandeur et n'être plus que de quelques secondes.

Tous ces derniers points et d'autres que l'on se contentera de citer ici comme l'utilisation de multicouches d'adsorbant , d'adsorbant présentant une affinité pour l'argon, de moteurs d'entraînement des machines à vitesse variable, comme le couplage de plusieurs unités identiques... ne constituent que des améliorations connues des cycles VPSA , éventuellement applicables dans le cadre de l'invention et ne seront pas plus développés dans le cadre de ce document.

L'exemple concerne la production d'un débit minimal de 120 tonnes par jour d'oxygène compté pur à une pureté de 90% molaire. La production doit être disponible de manière continue et constante à une pression de 1.35 bar abs. Le site est proche du niveau de la mer et les conditions locales correspondent à une zone tempérée et d'humidité normale.

Le cycle retenu est le cycle 7 décrit plus haut avec une pression haute de 1.50 bar abs et une pression basse de 0.35 bar abs.

On utilise 4 adsorbeurs comportant chacun 10 m3 d'adsorbant avec environ 85% volume de LiLSX. Le temps de cycle est de 36 secondes, soit un temps de phase de 9 secondes. Chacune des étapes élémentaires est d'environ 3 secondes. Au cours de l'étape 10, l'air atmosphérique est introduit légèrement postérieurement à l'oxygène de pureté T3, alors que la pression dans l'adsorbeur est de l'ordre de 0. 45 bar abs. Le flux T1 qui constitue la production est donc à 90% molaire O2, le flux T2 est entre 88 et 89% O2, le flux T3 est autour de 85% O2. L'alimentation en air a un débit de 20 000 m3/h, la première pompe à vide PAV1 a un débit également d'environ 20 000 m3/h alors que la deuxième pompe à vide PAV2 a un débit proche de 30 000 m3/h.

On obtient de la sorte une production en oxygène un peu supérieure aux 120 tonnes par jour requises, ce qui correspond à une productivité d'environ 90 Nm3/h/m3.

L'énergie spécifique dépend essentiellement du choix des machines et plus particulièrement de l'optimisation entre performances, investissement et simplicité. Elle peut descendre un peu en dessous de 0.3 KWh/Nm3 en favorisant la performance ou atteindre environ 0.34 KWh/Nm3 avec des machines plus rustiques.

L'utilisation de matériau à changement de phase permet de supprimer la majorité des effets thermiques et un gain en productivité et énergie spécifique pouvant dépasser 10%.

On a vérifié par simulation que les autres cycles décrits dans le présent document donnaient des résultats proches de celui du cycle 7, des conditions opératoires un peu différentes de celles de l'exemple pouvant favoriser tels ou tels cycles.

Cela conforte dans l'idée que les choix fondamentaux concernent d'une part la production d'oxygène à 3 niveaux de pureté à savoir :

- pour une pureté requise Pur1 de 93% O2, un second flux compris environ entre 91 et 92% O2 et un troisième flux entre 88 et 91%
- pour une pureté requise Pur1 de 90% O2, un second flux compris entre environ 88 et 89% O2 et un troisième flux entre 85 et 87%

et d'autre part l'utilisation de ces flux en tant qu'élution et pour la repressurisation dans un ordre optimal.

On notera que le flux T2 est produit pendant la seule étape 3 alors qu'il est utilisé pendant les étapes 8, 9 et 11. Compte tenu de la durée des étapes, chacune de l'ordre de 3 secondes, on voit qu'il convient d'utiliser une capacité tampon pour stocker la quantité de gaz nécessaire à l'étape 8 et à l'étape 11 alors que celle utilisée lors de l'étape 9 peut être prélevée directement. Dans ce cas, on a bien une même pureté moyenne des flux correspondant aux étapes 8, 9 et 11. On pourrait éventuellement bâtir un cycle proche avec des durées d'étapes un peu différentes, une étape 9 plus courte par exemple, qui conduirait à un petit écart de composition entre la quantité stockée et la quantité utilisée directement. Un tel écart n'est pas significatif et l'introduction d'un quatrième flux ne se justifie pas au niveau technique. Il en est de même pour le principe de l'invention qui englobe de telles variantes non significatives.

## Revendications

1. Procédé de production d'oxygène par adsorption d'un flux d'air atmosphérique mettant en œuvre une unité de type VPSA comprenant 4 adsorbeurs, 1 compresseur d'air et 2 pompes à vide, avec chaque adsorbeur suivant un même cycle de pression avec un décalage d'un temps de phase, comprenant les étapes suivantes :

   a) production d'un premier flux gazeux riche en oxygène comprenant une teneur en oxygène T1 tout en chargeant en amont l'adsorbeur du flux d'air atmosphérique,

   b) production d'un second flux gazeux riche en oxygène comprenant une teneur en oxygène T2 < T1,

   c) production d'un troisième flux gazeux riche en oxygène comprenant une teneur en oxygène T3 < T2 < T1 avec extraction simultanée d'un flux résiduaire enrichi en azote,

   d) élution de l'adsorbeur, duquel sont sortis les trois flux gazeux produits aux étapes a), b) et c), au moyen exclusivement du second flux gazeux produit à l'étape b) ou du troisième flux gazeux produit à l'étape c),

   e) repressurisation de l'adsorbeur ayant subi l'élution de l'étape d) avec successivement au moins deux flux, un premier et un deuxième flux de repressurisation, à teneur croissante en oxygène, le premier flux de repressurisation étant le troisième flux gazeux produit à l'étape c) et le deuxième flux de repressurisation étant le deuxième flux gazeux produit à l'étape b).

2. Procédé selon la revendication 1, **caractérisé en ce que** la production du second flux gazeux à l'étape b) s'effectue par dépressurisation à co-courant.

3. Procédé selon la revendication 1, **caractérisé en ce que** la production du second flux gazeux à l'étape b) s'effectue en deux temps, un premier temps pendant lequel la production est réalisée par dépressurisation à co-courant et un deuxième temps pendant lequel la production est réalisée par une dépressurisation à co-courant combinée à une dépressurisation à contre-courant.

4. Procédé selon la revendication 3, **caractérisé en ce que** la dépressurisation à contre-courant s'effectue au moyen d'une vanne.

5. Procédé selon l'une des revendications 1 à 4, **caractérisé en ce que** l'étape e) de repressurisation est effectuée avec successivement 3 flux, un premier, un deuxième et un troisième flux de repressurisation, à teneur croissante en oxygène, le premier flux de repressurisation étant le troisième flux gazeux produit à l'étape c), le deuxième flux de repressurisation étant le deuxième flux gazeux produit à l'étape b) et le troisième flux de repressurisation étant le premier flux gazeux produit à l'étape a).

6. Procédé selon l'une des revendications 1 à 5, **caractérisé en ce que** :

   - la pression à la fin de l'étape a) est comprise entre 1,75 et 1,25 bara, préférentiellement entre 1,55 et 1,45 bara,
   - la pression à la fin de l'étape b) est comprise entre 1,5 et 1,0 bara, préférentiellement entre 1,30 et 1,20,
   - la pression à la fin de l'étape c) est comprise entre 1,0 et 0,7 bara, préférentiellement entre 0,90 et 0,80, et
   - la pression basse du cycle de pression est comprise entre 0,25 et 0,45 bara, préférentiellement entre 0,40 et 0,30.

**7.** Procédé selon l'une des revendications 1 à 6, **caractérisé en ce que** le temps de cycle de ladite unité est inférieur à 60 secondes, préférentiellement compris entre 15 et 45 secondes.

**8.** Procédé selon l'une des revendications 1 à 7, **caractérisé en ce qu'**au moins une pompe à vide, de préférence une pompe à vide centrifuge, comporte un ou plusieurs étages, en parallèle et/ou en série, choisi parmi le groupe formé par les machines volumétriques de type à lobes, à palettes, à anneau liquide, en particulier à anneau d'eau.

**9.** Procédé selon l'une des revendications 1 à 8, **caractérisé en ce que** le compresseur d'air C-air alimente en permanence un des 4 adsorbeurs.

**10.** Procédé selon l'une des revendications 1 à 9, **caractérisé en ce que** le premier flux gazeux produit à l'étape a) est envoyé au moins en partie dans une première capacité tampon.

**11.** Procédé selon l'une des revendications 1 à 10, **caractérisé en ce que** le second flux gazeux produit à l'étape b) est envoyé au moins en partie dans une deuxième capacité tampon.

**Patentansprüche**

**1.** Verfahren zur Produktion von Sauerstoff durch Adsorption einer atmosphärischen Luftströmung unter Einsatz einer Einheit vom VPSA-Typ, umfassend 4 Adsorber, 1 Luftkompressor und 2 Vakuumpumpen, wobei jeder Adsorber einem gleichen Druckzyklus mit einer Verschiebung um einen Phasentakt folgt, umfassend die folgenden Schritte:

a) Produktion einer ersten sauerstoffreichen gasförmigen Strömung, die einen Sauerstoffgehalt T1 umfasst, bei gleichzeitigem stromaufwärtigem Laden des Adsorbers mit der atmosphärischen Luftströmung,
b) Produktion einer zweiten sauerstoffreichen gasförmigen Strömung, die einen Sauerstoffgehalt T2 < T1 umfasst,
c) Produktion einer dritten sauerstoffreichen gasförmigen Strömung, die einen Sauerstoffgehalt T3 < T2 < T1 umfasst mit simultaner Extraktion einer mit Stickstoff angereicherten Restströmung,
d) Elution des Adsorbers, aus dem die drei gasförmigen Strömungen, die in den Schritten a), b) und c) produziert wurden, ausgetreten sind, mittels ausschließlich der zweiten gasförmigen Strömung, die im Schritt b) produziert wurde, oder der dritten gasförmigen Strömung, die im Schritt c) produziert wurde,
e) erneute Druckbeaufschlagung des Adsorbers, der der Elution des Schritts d) unterworfen wurde, mit aufeinanderfolgend mindestens zwei Strömungen, einer ersten und einer zweiten Strömung zur erneuten Druckbeaufschlagung, mit zunehmendem Sauerstoffgehalt, wobei die erste Strömung zur erneuten Druckbeaufschlagung die dritte gasförmige Strömung ist, die im Schritt c) produziert wurde, und die zweite Strömung zur erneuten Druckbeaufschlagung die zweite gasförmige Strömung ist, die im Schritt b) produziert wurde.

**2.** Verfahren nach Anspruch 1, **dadurch gekennzeichnet, dass** die Produktion der zweiten gasförmigen Strömung im Schritt b) durch Druckentlastung bei Gleichstrom erfolgt.

**3.** Verfahren nach Anspruch 1, **dadurch gekennzeichnet, dass** die Produktion der zweiten gasförmigen Strömung im Schritt b) in zwei Etappen erfolgt, einer ersten Etappe, bei der die Produktion durch Druckentlastung bei Gleichstrom erzielt wird, und einer zweiten Etappe, bei der die Produktion durch eine Druckentlastung bei Gleichstrom kombiniert mit einer Druckentlastung bei Gegenstrom erzielt wird.

**4.** Verfahren nach Anspruch 3, **dadurch gekennzeichnet, dass** die Druckentlastung bei Gegenstrom mithilfe eines Ventils erfolgt.

**5.** Verfahren nach einem der Ansprüche 1 bis 4, **dadurch gekennzeichnet, dass** der Schritt e) der erneuten Druckbeaufschlagung mit aufeinanderfolgend 3 Strömungen durchgeführt wird, einer ersten, einer zweiten und einer dritten Strömung zur erneuten Druckbeaufschlagung, mit zunehmendem Sauerstoffgehalt, wobei die erste Strömung zur erneuten Druckbeaufschlagung die dritte gasförmige Strömung ist, die im Schritt c) produziert wurde, die zweite Strömung zur erneuten Druckbeaufschlagung die zweite gasförmige Strömung ist, die im Schritt b) produziert wurde, und die dritte Strömung zur erneuten Druckbeaufschlagung die erste gasförmige Strömung ist, die im Schritt a) produziert wurde.

**6.** Verfahren nach einem der Ansprüche 1 bis 5, **dadurch gekennzeichnet, dass**:

- der Druck am Ende des Schritts a) zwischen 1,75 und 1,25 bar abs, vorzugsweise zwischen 1,55 und 1,45 bar abs enthalten ist,
- der Druck am Ende des Schritts b) zwischen 1,5 und 1,0 bar abs, vorzugsweise zwischen 1,30 und 1,20 enthalten ist,
- der Druck am Ende des Schritts c) zwischen 1,0 und 0,7 bar abs, vorzugsweise zwischen 0,90 und 0,80 enthalten ist, und
- der Niederdruck des Druckzyklus zwischen 0,25 und 0,45 bar abs, vorzugsweise zwischen 0,40 und 0,30 enthalten ist.

7. Verfahren nach einem der Ansprüche 1 bis 6, **dadurch gekennzeichnet, dass** die Zykluszeit der Einheit weniger als 60 Sekunden beträgt, vorzugsweise zwischen 15 und 45 Sekunden enthalten ist.

8. Verfahren nach einem der Ansprüche 1 bis 7, **dadurch gekennzeichnet, dass** mindestens eine Vakuumpumpe, vorzugsweise eine zentrifugale Vakuumpumpe, eine oder mehrere Stufen, parallel und/oder in Reihe, umfasst, ausgewählt aus der Gruppe, die durch die Verdrängungsmaschinen vom Kolben-, Flügelzellen-, Flüssigkeitsring-, insbesondere Wasserringtyp gebildet wird.

9. Verfahren nach einem der Ansprüche 1 bis 8, **dadurch gekennzeichnet, dass** der C-Luft Luftkompressor kontinuierlich einen der 4 Adsorber speist.

10. Verfahren nach einem der Ansprüche 1 bis 9, **dadurch gekennzeichnet, dass** die erste gasförmige Strömung, die im Schritt a) produziert wird, mindestens teilweise in eine erste Pufferkapazität geleitet wird.

11. Verfahren nach einem der Ansprüche 1 bis 10, **dadurch gekennzeichnet, dass** die zweite gasförmige Strömung, die im Schritt b) produziert wird, mindestens teilweise in eine zweite Pufferkapazität geleitet wird.


**Claims**

1. Method for producing oxygen by adsorbing a stream of atmospheric air using a VPSA unit comprising 4 adsorbers, 1 air compressor and 2 vacuum pumps, with each adsorber undergoing one single pressure cycle with a phase time shift, comprising the following steps:

   a) producing a first stream of gas rich in oxygen, comprising an oxygen content T1 while loading the adsorber of the stream of atmospheric air upstream,
   b) producing a second stream of gas rich in oxygen, comprising an oxygen content T2 < T1,
   c) producing a third stream of gas rich in oxygen, comprising an oxygen content T3 < T2 < T1 while simultaneously extracting a nitrogen-enriched residual stream,
   d) eluting the adsorber, from which the three streams of gas produced in steps a), b) and c) are taken, exclusively via the second stream of gas produced in step b) or the third stream of gas produced in step c),
   e) repressuring the adsorber that underwent the elution of step d) consecutively with at least two streams, first and second repressuring streams, with increasing oxygen content, the first repressuring stream being the third stream of gas produced in step c) and the second repressuring stream being the second stream of gas produced in step b).

2. Method according to claim 1, **characterised in that** the production of the second stream of gas in step b) is carried out by depressurisation at co-current.

3. Method according to claim 1, **characterised in that** the production of the second stream of gas in step b) is carried out in two steps, a first step during which the production is carried out by depressurisation at co-current and a second step during which the production is carried out by a depressurisation at co-current combined with a depressurisation at counter-current.

4. Method according to claim 3, **characterised in that** the depressurisation at counter-current is carried out by means of a valve.

5. Method according to one of claims 1 to 4, **characterised in that** step e) of repressuring is carried out with consecutively 3 steams, a first, a second and a third repressuring stream, with increasing oxygen content, the first repressuring stream being the third stream of gas produced in step c), the second repressuring stream being the second stream of gas produced in step b) and the third repressuring stream being the first stream of gas produced in step a).

6. Method according to one of claims 1 to 5, **characterised in that**:

   - the pressure at the end of step a) is comprised between 1.75 and 1.25 bar preferably between 1.55 and 1.45 bara,
   - the pressure at the end of step b) is comprised between 1.5 and 1.0 bara, preferably between 1.30 and 1.20,
   - the pressure at the end of step c) is comprised between 1.0 and 0.7 bara, preferably between 0.90 and 0.80, and
   - the low pressure of the pressure cycle is comprised between 0.25 and 0.45 bara, preferably between 0.40 and 0.30.

7. Method according to one of claims 1 to 6, **characterised in that** the duration of the pressure cycle is less than 60 seconds, preferably comprised between 15 and 45 seconds.

8. Method according to one of claims 1 to 7, **characterised in that** at least one vacuum pump, preferably a centrifuge vacuum pump, comprises one or more stages, in parallel and/or in series, chosen from the group comprising volumetric machines of the lobe type, with pallets, with a liquid ring, in particular with a water ring.

9. Method according to one of claims 1 to 8, **characterised in that** the air compressor C-air constantly supplies one of the 4 absorbers.

10. Method according to one of claims 1 to 9, **characterised in that** the first stream of gas produced in step a) is sent at least partially to a first buffer capacity.

11. Method according to one of claims 1 to 10, **characterised in that** the second stream of gas produced in step b) is sent at least partially to a second buffer capacity.

**EP 3 274 074 B1**

## RÉFÉRENCES CITÉES DANS LA DESCRIPTION

**Documents brevets cités dans la description**

- EP 0948989 A1
- FR 2794993
- FR 2952553